# EUROPEAN PATENT SPECIFICATION

(11) **EP 1 629 196 B1**
(45) Date of publication and mention of the grant of the patent: **22.11.2006**
(21) Application number: 04751881.6
(22) Date of filing: 11.05.2004
(51) Int. Cl.: F04B 15/02, E04G 21/04

(54) **FILAMENT-WOUND COMPOSITE BOOM PIPE**
FASERGEWICKELTES VERBUNDAUSLEGERROHR
TUYAU DE FLECHE COMPOSITE A FILAMENT ENROULE

(30) Priority: 12.05.2003 US 469870 P
(43) Date of publication of application: 01.03.2006
(73) Proprietor: Putzmeister Inc., Sturtevant, Wisconsin 53177 (US)
(72) Inventor: MAYER, Martin, G., 72768 Reutlingen (DE); WILLIG, John, T., Cincinnati, OH 45208 (US)
(74) Representative: Hackett, Sean James
(86) International application number: PCT/US2004/014712
(87) International publication number: WO 2004/101992

(56) References cited:
- US-A- 3 860 175
- US-A- 4 290 836
- US-A- 5 351 716
- US-A1- 2002 117 219
- US-B1- 6 719 009

## Description

### Cross-Reference to Related Application

The present application is based on and claims priority to U.S. Provisional Patent Application Serial No. 60/469,870 filed on May 12, 2003.

### Background of the Invention

Embodiments of the present invention generally relate to a concrete pumping unit having a hinged structure, hereafter referred to as a boom arm, including a multi-section pipe, hereafter referred to as the boom pipe, for delivering pumped concrete to a location remote from the pumping unit. More specifically, embodiments of the present invention relate to the use and manufacture of filament-wound reinforced urethane pipe sections for use with a mobile concrete pumping vehicle. The filament-wound reinforced urethane pipe section reduces the overall weight of the boom arm while providing the required strength and durability for the delivery of concrete or other materials.

Presently, mobile concrete pumping vehicles and stationary concrete pumping units are available that include a multi-section boom arm that is folded into a compact condition during transport and storage. Once the pumping unit is positioned at the work site, the folded boom arm is extended to supply concrete to a remote location. Typically, the boom arm includes a steel boom pipe made up of multiple sections that are supported by the boom arm such that concrete can be supplied to a remote location on the work site. Each of the pipe sections is currently fabricated from steel to provide the required durability and strength to withstand the internal pressure of the concrete being pumped by the unit.

Currently, some mobile concrete pumping vehicles and mast-mounted pumping units include a boom arm that can extend up to 175 feet (53.3 m) from a base. When the boom arm is in its extended position, each section of the boom arm must be able to support not only the weight of the boom arm, but also the weight of the individual pipe sections and the concrete contained within each pipe section. Thus, the overall weight of the boom arm during the delivery of concrete is a limitation as to how long the boom arm can be constructed without adding significant reinforcements to the boom arm to support the total weight of the boom arm including the concrete being pumped.

One contemplated solution for reducing the overall weight of the boom arm is to replace the steel boom pipe sections with a lighter weight material, such as plastic. Although the plastic pipe sections would reduce the overall weight of the boom arm, few plastics are strong enough to prevent bursting due to the pumping pressure of approximately 1200 psi (82.7 bar) within each of the pipe sections. Therefore, although the idea of replacing the steel pipe with a lighter weight, high wear resistant alternative appears desirable, currently no pipe exists that provides the desired weight savings while maintaining the required strength and wearability associated with high pressure pumping operations, such as with concrete.

Presently, concrete pumping units typically include multiple boom pipe sections that are used to deliver pumped concrete from its input receptacle, hereafter referred to as the hopper, to the tip of its boom arm at a remote location on the work site. Each of the pipe sections, both on the chassis deck and the retractable boom arm, are currently fabricated from steel with grooved steel sleeves welded onto the pipe section at both ends. The current steel pipe sections are connected with a steel or aluminum clamp that uses the grooves on the steel sleeves, along with a rubber seal ring, to form a sealed connection that can withstand the internal pressures of the material being pumped.

US 2002/0117219 A 1 is directed to a boom comprising a plurality of boom sections connected together in an articulated arrangement. A pipeline is carried by the boom sections, wherein the pipeline is disposed inside at least one of the boom sections. The pipeline comprises pipe sections connected by transitional piping.

US 4,290,836 is directed to a method of making a composite pipe having an integral bell end.

Therefore, a need exists for both a mobile concrete pumping vehicle and mast-mounted pumping unit that utilize a supply of pipe having a reduced weight that is strong enough to withstand the pressures of pumping concrete. Further, a need exists for a composite pipe section that can be utilized with a mobile pumping vehicle that creates a significant weight reduction for the supply pipe while providing the required durability and strength. Further, a need exists for a boom pipe section that includes a grooved sleeve on each end such that the composite pipe sections can be connected in a similar manner to currently available pipe sections.

### Summary of the Invention

Embodiments of the present invention relate to a concrete pumping unit that utilizes a boom pipe formed from composite pipe sections each having an inner wear resistant layer and an outer reinforcing layer to deliver pumped concrete to the end of a hinged boom arm. Additionally, embodiments of the present invention are directed to a coupling design that enables the composite boom pipe sections to be attached to each other using conventional techniques.

A concrete pumping unit, such as a mobile pumping device, includes a boom arm having a plurality of boom sections such that the boom arm can be extended from a folded position to an extended position to provide a supply of concrete at a desired remote location. The boom arm sections each support one or more sections of a boom pipe such that pumped concrete can be directed to the end of the boom arm. Presently, each of the boom pipe sections is formed from steel. In accordance with embodiments of the present invention, the steel pipe sections are each replaced by a lightweight, durable filament-wound reinforced composite urethane pipe section. According to the present invention, there is defined a pumping unit as defined in claim 1, and a mobile pumping vehicle as defined in claim 2.

Each of the filament-wound composite pipe sections includes a wear resistant inner layer and a reinforcing outer layer of high strength fibers. The reinforcing outer layer provides the required hoop or tensile strength to withstand the pressure of concrete being pumped. The wear resistant inner surface provides the required durability for contact with the very abrasive concrete material being pumped.

The reinforcing layer of fibers is applied using a process called filament winding. Filament winding is a process where a continuous fiber tow, or untwisted unidirectional filaments, are laid down with a binder resin in a predetermined pattern over a rotating shape or mandrel. The mandrel in this case is a molded urethane tube. The fiber type, number of layers, cross pattern, and matrix resin are calculated to provide the necessary hoop strength and stiffness for the tube. The computer-controlled winding machine controls the path the fibers are laid down during the filament winding process. This machine also controls the rotational speed of the mandrel and other requirements.

The fiber used to develop the reinforcing layer is preferably carbon fiber, although other materials such as fiberglass and Kevlar® (Aramid Fiber) are also acceptable. The preferable binder resin is epoxy, although other binders such as urethane and polyester are acceptable.

The wear resistant inner layer is preferably formed from urethane having a durometer hardness rating of between 90-A and 95-A. However, other hardness ratings are contemplated depending upon the type of material being pumped.

In an embodiment, each of the reinforced filament-wound pipe sections utilizing carbon fiber windings and urethane weighs approximately 25% of a similar steel pipe. Thus, the carbon fiber reinforced urethane pipe sections have a weight of approximately 2.6 pounds per foot (3.9 kg/m), as compared to approximately 10.2 pounds per foot (15.2 kg/m) for a steel pipe. Thus, a mobile pumping vehicle utilizing the composite pipe sections of an embodiment of the present invention and having a boom length of 200 feet (61 m) can realize a reduction in boom force of about 152,000 ft. pounds (206,112 Nm).

The reinforced composite boom pipe sections of embodiments of the present invention are fabricated as follows. Initially, a urethane tube is molded using a centrifugal molding method. This process uses a machined metal pipe as the mold, where the metal pipe's inside diameter is finished and honed to a specific diameter. This diameter will determine the finished outside diameter of the molded urethane tube.

The metal pipe mold is heated in a machine to approximately 250°F (121.1°C) and spun on its axis at approximately 400 rpm. When liquid urethane is poured into the spinning metal tube, the centrifugal force created by the rotating tube flows the urethane material outward against the pipe. After several minutes, the heat cures the urethane to the point where the urethane, now formed as a pipe, can be removed. This method provides a bubble free tube of exacting dimensions.

The urethane, being an elastomeric or rubber like material, cannot by itself withstand the pressures associated with the concrete pumping process and thus must be reinforced. Embodiments of the present invention provide such reinforcement by filament winding.

In filament winding, the urethane tube is wrapped with high strength fibers using a computer-controlled machine, although manual machines can be used with less reliability. The filament winding process uses the urethane tube as its mandrel or the shape that the carbon fiber is wound over. Since the urethane tube is flexible, the tube is fitted over a metal inner mandrel held between centers and allowed to spin while fiber and resin is applied. The metal center mandrel provides the necessary stiffness to the urethane during processing. The filament-winding machine spins at low speeds, while a continuous fiber is applied to the surface in a predetermined pattern over the entire length of the tube. The preferred resin for securing the fibers to the urethane tube is epoxy, although other resins can be applied, such as urethane or polyester.

Because the fiber is applied in a back and forth motion, each end of the tube includes a turn-around section where the fibers do not maintain appropriate alignment. On completion of the filament winding process, the ends of the tube are cut off to ensure correct fiber alignment.

Once the urethane tube, now fiber reinforced, has been removed from the metal inner mandrel and the ends cut, the tube is post cured in an oven to achieve maximum properties. After the curing process, metal end couplings are bonded to each end of the tube for assembly purposes. Typically, urethane or epoxy adhesive is used to secure the end couplings to the exterior surface of the composite tube.

Various other features, objects and advantages of embodiments of the invention will be made apparent from the following description taken together with the drawings.

### Brief Description of the Drawings

The drawings illustrate the best mode presently contemplated of carrying out embodiment of the invention.

In the drawings:

Fig. 1 is a side view of a mobile concrete pumping vehicle of the present invention that includes reinforced composite pipe sections on the hinged boom arm;

Fig. 2 is a back perspective view of the mobile concrete pumping vehicle illustrating the incorporation of the reinforced composite pipe;

Figs. 3a and 3b illustrate the mobile concrete pumping vehicle with the boom arm in intermediate positions between a retracted position and a fully extended position;

Fig. 4 is a side view of a filament-wound composite pipe section of the present invention with a pair of end couplings;

Fig. 5 is a section view taken along line 5-5 of Fig. 4 illustrating the actual configuration of the filament-wound pipe section and the bonded connection of the end coupling;

Fig. 6 is a perspective view of the mold used to form the urethane tube of the pipe section;

Fig. 7 is a magnified end view of the mold used to form the urethane tube of the pipe section illustrating the set back of the pipe section within the mold;

Fig. 8 is a schematic illustration of the position of the mold within an oven for setting the urethane tube section;

Fig. 9 is a perspective view illustrating the filament windings over the urethane tube; and

Fig. 10 is a section view illustrating a second embodiment of the end coupling bound to the end of the filament-wound pipe section.

### Detailed Description of Preferred Embodiments

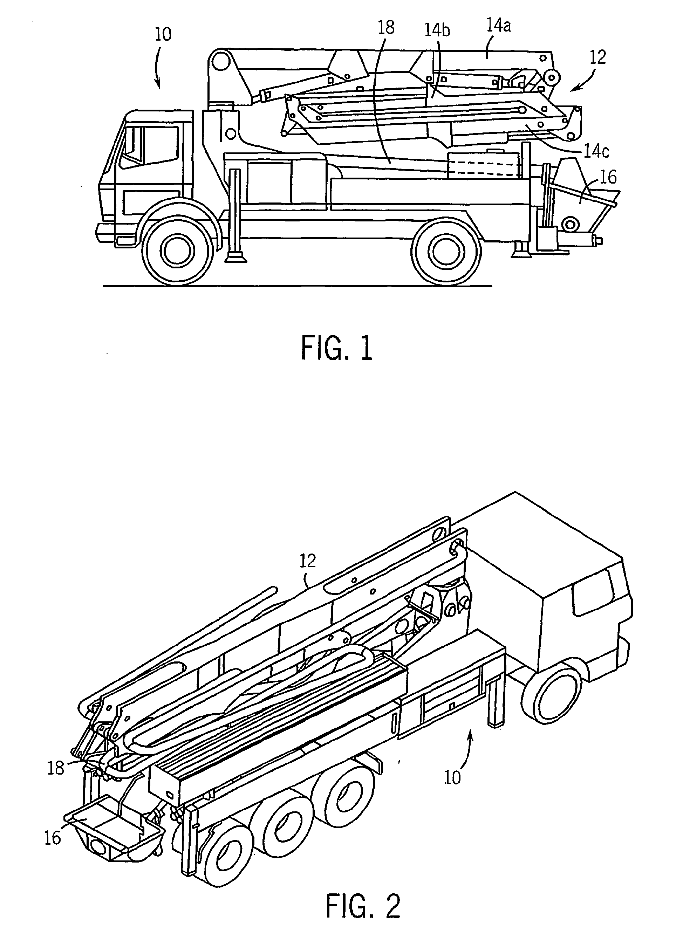

Fig. 1 illustrates a mobile concrete pumping vehicle 10 that includes an extendible boom arm 12 having independent sections 14a-14c that can be unfolded and extended. Each of the sections 14a-14c supports a portion or portions of a composite boom pipe of the present invention to provide a path for pumped concrete to flow from a storage hopper 16 to the outermost tip of the boom arm.

Referring now to Fig. 2, the mobile concrete pumping vehicle 10 includes a plurality of individual boom pipe sections 18 that extend along the length of each section of the extendable boom arm 12 to provide the path for concrete from the hopper 16. The individual pipe sections 18 are joined to each other by a movable joint such that the boom arm 12 can be extended without interrupting the flow path for the concrete through the joined pipe sections 18.

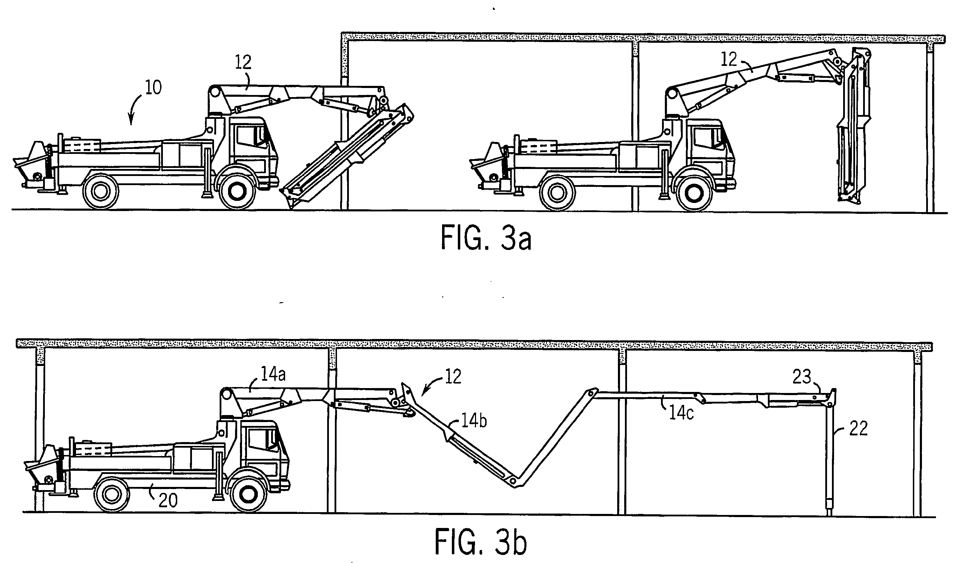

Referring now to Fig. 3a, thereshown is the boom arm 12 beginning to extend from the body 20 of the vehicle 12. As illustrated in Fig. 3b, the boom arm 12 can be extended a significant distance from the body 20 to provide a flow of concrete out of a concrete delivery hose 22 at the outer end 23 of the boom arm 12 to place concrete at the desired location. Currently, mobile concrete pumping vehicles have boom arms 12 that can extend up to 175 feet from the truck body 20 to supply concrete to the desired location.

As can be understood in Fig. 3b, each of the boom sections 14a-14c must be constructed of a material strong enough to support not only the weight of the boom arm 12, but also the weight of the boom pipe sections and the weight of the concrete being delivered through the pipe sections. The weight on the boom arm 12 creates a significant force along the length of the boom arm sections 14a-14c, thus limiting the length of the boom per cross-sectional design and material type. Eventually, the total weight of pipes, concrete, and arms reaches the point that a longer boom can only be achieved with a cross-section or material that is prohibitive due to cost, availability, and/or fabrication restraints. In addition, to avoid an unstable condition, the mobile concrete pumping vehicle 10 will need to weigh more (via added counterweights) which is undesirable in transportation.

Although embodiments of the present invention are shown in the figures as being particularly desirable for use with a mobile concrete pumping vehicle, it should be understood that the composite boom pipe is also particularly desirable when used with other types of concrete pumping units. For example, concrete pumping units are currently available that include an extendable boom arm where the entire pumping unit is mounted on top of an extended mast. The boom arm is extendable from a base such that concrete can be delivered to a remote location at a work site. A mast-mounted concrete pumping unit is particularly useful in constructing multiple floor buildings. The advantages of the composite urethane boom pipe sections are equally applicable to this type of pumping unit, since the composite urethane boom pipe sections reduce the overall weight of the boom arm which allows the length of the boom arm to be increased as compared to boom arms utilizing steel boom pipe sections.

Presently, each of the boom pipe sections 18 is formed from a metal material, such as steel, such that each section of pipe has a weight of approximately 12 pounds per foot (17.9 kg/m). Thus, the supply pipe for a 175 foot (53.3 m) boom arm would have an overall weight of 1,785 pounds (809.7 kg) empty. In accordance with the present invention, the boom pipe sections 18 of the mobile concrete pumping vehicle 10 are replaced with a reinforced composite urethane pipe sections having a significantly lower overall weight such that the weight of the boom arm 12 is significantly reduced as compared to the prior art.

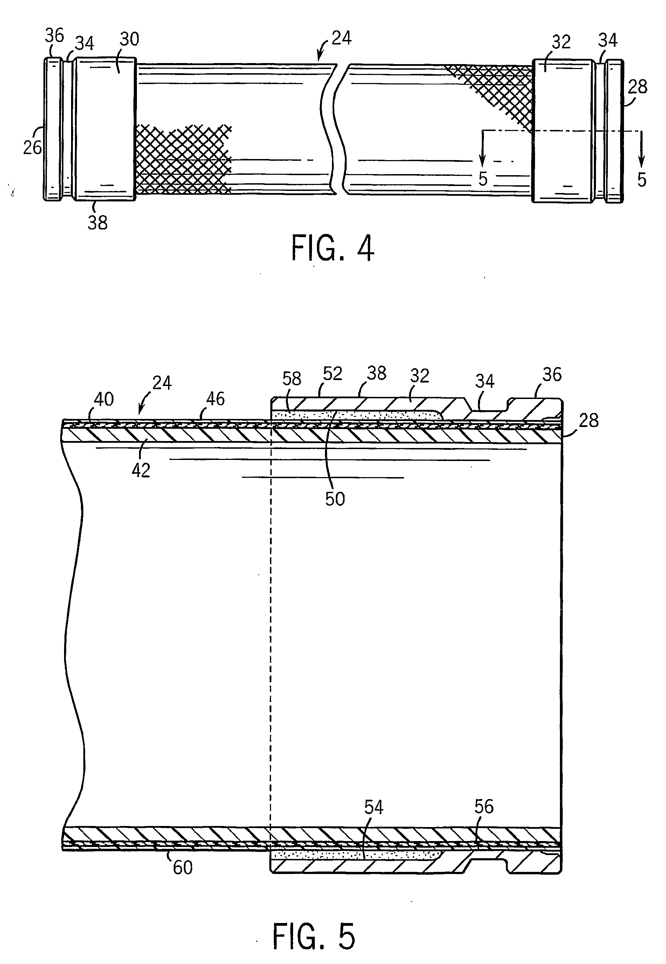

Referring first to Fig. 4, thereshown is a reinforced composite boom pipe section 24 that forms the basis of the present invention. The boom pipe section 24 extends from a first end 26 to a second end 28 to define the overall length of the boom pipe section 24. In the preferred embodiment of the invention, the length of the pipe section 24 is up to three meters, although longer lengths of pipe are certainly contemplated as being within the scope of the present invention.

The pipe section 24 includes a first end coupling 30 and a second end coupling 32 that allow the pipe section 24 to be joined to others in a conventional manner. Each of the end couplings 30, 32 includes a recessed groove 34, commercially referred to as a Victaulic^{®} groove, positioned between an outer lip 36 and an inner attachment flange 38. The configuration of each of the end couplings 30, 32 is conventional and currently utilized in securing the pipe on mobile concrete pumping vehicles.

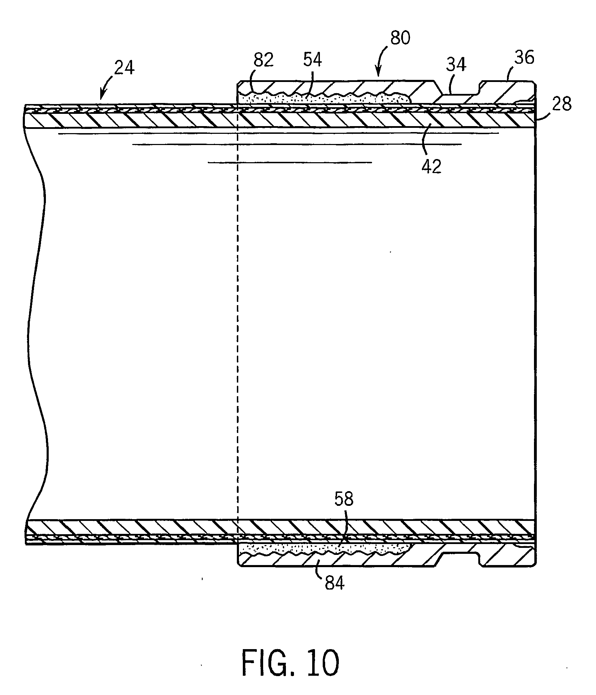

Referring now to Fig. 5, thereshown is a cross-section view of the reinforced pipe section 24 of embodiments of the present invention. The reinforced pipe section 24 includes a wound reinforcement layer 40 and a wear resistant inner layer 42. In the preferred embodiment of the invention, the wound reinforcing layer 40 is filament-wound fiber 44, such as illustrated in Fig. 9. This wound fiber 44 can be made from any type of fiber material, such as fiberglass, carbon fiber or a synthetic fiber such as Kevlar® or Vectran®. In the preferred embodiment of the invention, the fiber material 44 is carbon fiber due to its weight and strength characteristics. The carbon fiber 44 provides increased tensile strength for the reinforced boom pipe section 24 while providing for a low overall weight.

Referring back to Fig. 5, in the embodiment of the invention illustrated, the wound reinforcing layer 40 has an approximate thickness of 1/8 inches (0.3 cm) and is created using a cross-hatch pattern to provide support in both the axial and radial directions. The type of pattern is selected based on computer calculations and testing. The typical internal pressure generated in a concrete boom pipe is approximately 1200 psi (82.7 bar). Since it is desirable for the pipe section to be designed to have a safety factor of two, the reinforced pipe section 24 should be able to withstand pressures approaching 2400 psi (165.5 bar). The wound reinforcing layer 40 provides the hoop strength required, while the wear layer 42 provides a high wear resistant inner surface for the flow of rough materials, such as concrete.

Referring back to Fig. 5, the fiber-wound reinforcing layer 40 includes an outer layer 46 that is formed from the binder material used in applying the filament winding. The outer layer 46 provides protection for the winding of the reinforcing layer 40 to protect the pipe section 24 from wear due to contact during normal usage.

Referring back to Fig. 5, in the preferred embodiment of the invention illustrated, the wear layer 42 has a thickness of approximately 3/16 inches (0.5cm) and is formed from a durable resin, such as urethane. The urethane wear layer 42 provides the required wear and abrasion resistance while providing low overall weight for the reinforced pipe section 24. Urethane, and other chemicals similar thereto, are available in a number of different hardnesses and chemistries. The actual formulation in hardness of the urethane wear layer 42 can be adapted depending upon the type of material flowing through the reinforced pipe section 24. In the preferred embodiment of the invention, urethane having a durometer hardness rating of 90-A to 95-A are selected. However, it is contemplated that for a non-concrete piping application, the urethane could have a durometer hardness rating as low as 70-A, or as high as 75-D.

Referring back to Fig. 5, the pipe section 24 includes an end coupling 32 positioned near the outer end 28. As can be seen in Fig. 4, a second end coupling 30 is also coupled to the pipe section 24 near the first end 26.

As illustrated in Fig. 5, the end coupling 32 is defmed by an inner wall 50 and an outer wall 52. Preferably, the end coupling 32 is formed from a unitary section of steel in a conventional manner.

The end coupling 32 includes an inner, annular groove 54 that is recessed from the inner wall 50. The annular groove 54 has a diameter slightly greater than the outer diameter of the pipe section 24 as illustrated. The inner most portion 56 of the inside wall 50 has a diameter that generally corresponds to the outer diameter of the pipe section 24 near the outer end 28.

As described previously, the end coupling 32 includes a recessed outer groove 34 positioned between an outer lip 36 and the inner attachment flange 38. The groove 34 is commonly referred to as Vitraulic® groove as is conventionally used in mobile concrete pumping vehicles.

The end coupling 32 is attached to the end 28 of the composite pipe section 24 by placing a supply of urethane adhesive 58 between the inner recessed groove 54 and the outer surface 60 of the outer layer 46 applied over the reinforcing layer 40. The high strength adhesive 58 provides a permanent bond between the end coupling 32 and the reinforced pipe section 24 such that the pipe section 24 can be used in a normal manner. For example, the pipe section 24 having the pair of end couplings 30, 32 can be connected to either other composite pipe sections 24, or conventional steel boom type sections, using what is commercially called a Vitraulic® clamp. As discussed, the Vitraulic® groove 34 allows the urethane composite boom pipe to be interchangeable with the current steel boom pipes presently available.

The inner surface 56 of the end coupling 32 contacts the outer surface 60 of the boom pipe section 24 to prevent the adhesive 58 from flowing out of.the end 28. The surface 56 thus traps the adhesive 58 and allows the adhesive to set and permanently attach the end coupling 32 to the boom pipe section 24.

The reinforced composite pipe sections constructed in accordance with the present invention utilizing urethane inner tube layer 42 with the filament winding outer layer 40 are roughly 25% in weight compared to the steel pipe sections. For example, the composite pipe section 24 has a weight of approximately 2.6 pounds per foot (3.9 kg/m), while a similar steel pipe has a weight of approximately 10.2 pounds per foot (15.2 kg/m). Thus, in a mobile concrete pumping vehicle having a boom arm with an extended length of 200 feet (61 m), the mobile concrete pumping vehicle would realize a reduction in force of approximately 152,000 ft. pounds (206,112 Nm). This provides a significant advantage currently not available.

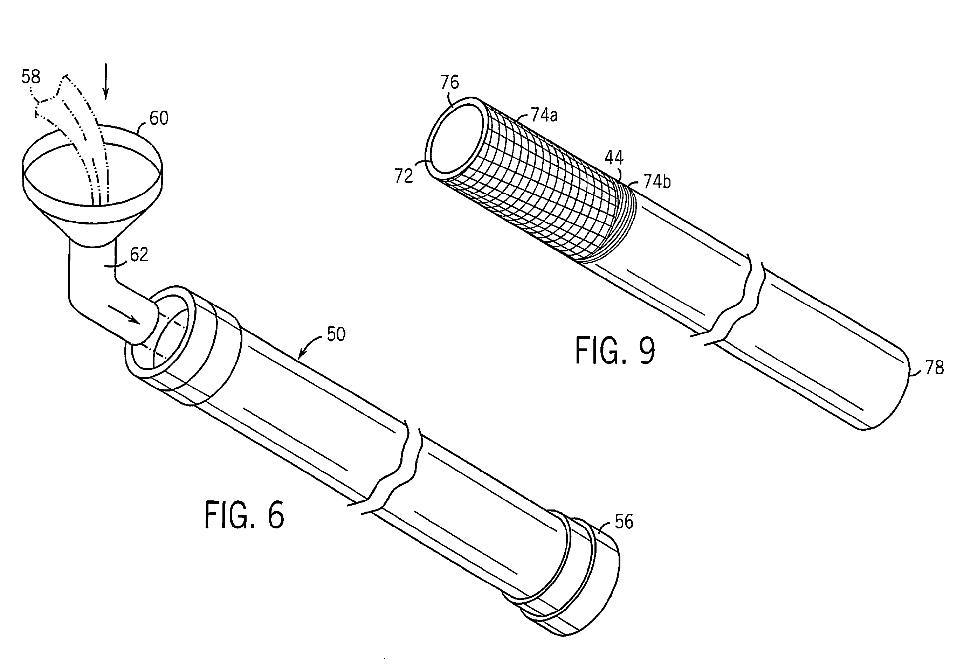

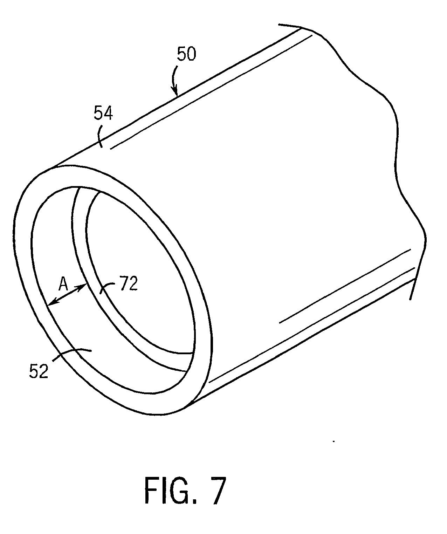

The method of forming the reinforced pipe section 24 will now be described. The first step in creating the reinforced pipe section 24 of the present invention involves creating a urethane tube that will form the wear layer 42. As illustrated in Fig. 6, a mold 50 is provided. The mold 50 is typically a steel pipe that has a polished inner wall 52 and an outer wall 54 as shown in Fig. 7. The mold 50 preferably has a length slightly greater than the length of the reinforced pipe section to be formed such that the ends of the tube of urethane formed can be cut and the tube formed of the desired length.

Referring back to Fig. 6, the mold 50 includes a first end piece 56 that is installed on one end of the mold as illustrated. Initially, the mold 50 is heated to an elevated temperature prior to the insertion of the liquid urethane into the mold interior. After the first end piece 52 is installed, a supply of liquid urethane 58 is preferably fed through a funnel 60 and connecting pipe 62 and allowed to flow along the axial length of the mold 50. The amount of urethane poured into the mold 50 depends on the desired wall thickness for the wear layer 42 illustrated in Fig. 5. At the elevated temperatures of approximately 230° F (110°C), the viscosity of the urethane is reduced, which allows the urethane to flow easier along the length of the mold 50. Although the embodiment shown in Fig. 6 contemplates the simple insertion of the liquid urethane, it is contemplated that the urethane may be pumped into the mold interior under pressure, depending upon the specific shape of the mold 50.

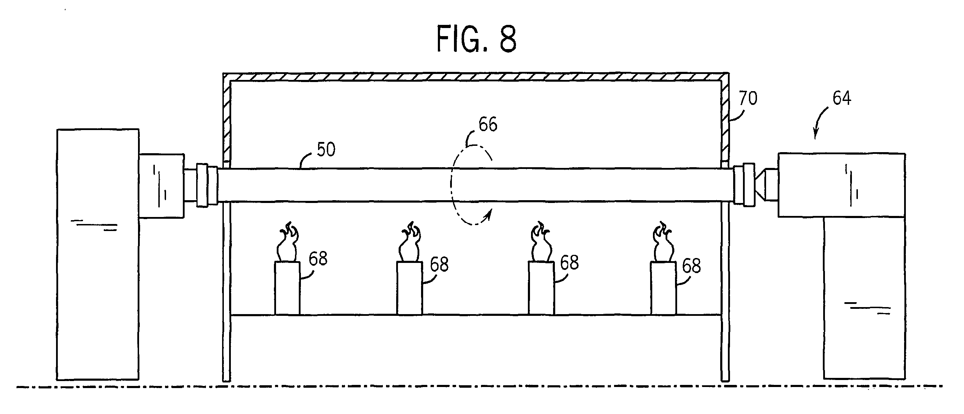

Referring now to Fig. 8, once the mold 50 has been filled with the required supply of urethane, the mold extends along a horizontal axis within a machine 64. The machine 64 can be operated to spin the mold 50 about its horizontal axis, as illustrated by arrow 66, such that the urethane is forced outward against the smooth inner wall of the mold 50.

In the preferred embodiment of the invention, the machine 64 includes several heating elements 68 contained within enclosed, insulated housing 70. The heating element 68 elevate the temperature of the mold and the urethane to allow the urethane to properly flow against the outer wall of the mold and ultimately to cause the urethane to set.

Once the liquid urethane and the mold are heated, the speed of rotation of the mold 50 is increased such that the spinning mold 50 creates a centrifugal force. In the preferred embodiment of the invention, the mold is rotated at approximately 1000 rpms to generate the required centrifugal force. During this rotation, any air pockets that are contained within the urethane are driven to the center to provide porosity-free part. Once again, the thickness of the wear layer is controlled by the amount of urethane poured into the mold.

After approximately 30 minutes of rotation and exposure to heat, the urethane within the mold 50 becomes cured enough to allow the tube that forms the urethane wear layer to be removed from the mold 50. Once the urethane tube has been removed, the tube is post cured in an oven for several hours to fully cure the urethane.

As illustrated in Fig. 7, the urethane tube 72 that ultimately forms the inner layer has a length less than the length of the mold, as illustrated by length A. The difference between the length of the urethane tube 72 and the mold 50 results from the insertion of the end cap 56 onto each end of the mold, as was described in Fig. 6.

Referring now to Fig. 9, once the urethane tube 72 has been formed, a reinforcing layer is applied using a filament winding process. During the filament winding process, a continuous tow, or untwisted unidirectional filament, is laid down with a binder resin in a predetermined pattern over a rotating mandrel. In embodiments of the present invention, the urethane tube 72 is supported over a metal mandrel to provide additional support for the urethane tube.

Once the inner mandrel and urethane tube are properly supported, the fiber layers are applied to the urethane tube in a pattern with a supply of resin. In the embodiment of the invention illustrated in Fig. 9, the fiber layer is applied over several passes to create a first pattern 74a and a second pattern 74b. The multiple passes and multiple patterns of the filament winding dictate the hoop strength of the tube and provides the required strength for the use of the pipe section. The computer-controlled filament winding machine controls the path that the fibers are laid down while simultaneously controlling the speed that the urethane tube is being rotated during the filament winding process.

Once the urethane has been fully cured, the outer ends 76 and 78 of the tube are severed. The ends of the tube must be severed since during the filament winding process, the fiber is applied in a back-and-forth motion and each end of the tube includes a turn-around section where the fibers do not maintain appropriate alignment. For this reason, the urethane tube is created having a length longer than the length of the desired pipe sections such that each end of the tube can be severed.

The urethane tube, which has now been fiber reinforced and cut to its desired length, is then post-cured in an oven to achieve maximum properties for the tube. After the curing process, the metal end couplings 30, 32 shown in Fig. 4 are adhesively attached to each end of the tube to create the pipe section.

Although a first embodiment of the end coupling 32 is shown in Fig. 5, Fig. 10 illustrates a second embodiment of an alternate end coupling 80. In the embodiment of the invention illustrated in Fig. 10, the end coupling 80 includes a series of gripping ridges 82 formed along the inner wall that define the annular groove 54. Each of the gripping ridges 82 extends around the entire inner circumference of the end coupling 80. The individual gripping ridges 82 interact with the urethane adhesive 58 to provide improved gripping of the end coupling 80 at the end 28 of the pipe section 24. Each of the gripping ridges 82 is formed by removing a portion of the wall 84 of the end coupling along the inner surface of the annular groove 54. Although numerous individual grooves are shown in the embodiment of Fig. 10, it is contemplated by the inventors that the size and shape of the individual ridges 82 could be modified while operating within the scope of the present invention.

Various alternatives and embodiments are contemplated as being within the scope of the following claims particularly pointing out and distinctly claiming the subject matter regarded as the invention.

## Claims

1. A pumping unit comprising:
a multi-section moveable boom arm (12) having a plurality of boom sections (14a-14c), the boom arm being extendable from a folded position to an extended position; and
a boom pipe supported by the boom arm, the boom pipe extending between a supply of material and an outer end (23) of the boom arm,
wherein the boom pipe is comprised of a plurality of joined boom pipe sections (24) **characterized in that** said pipe sections (24) each has a filament-wound reinforcing outer layer (46), a wear resistant inner layer (42), and an end coupling (30, 32) secured to both ends of the supply pipe section (24), each end coupling being secured to the pipe section by an adhesive.

2. The pumping unit of claim 1 wherein the reinforcing outer layer (46) is formed from a wound layer of braided fiber applied to an outer surface of the inner layer (42).

3. The pumping unit of claim 2 wherein the braided fiber is formed from carbon fiber.

4. The pumping unit of claim 2 wherein the wear resistant inner layer (42) is formed from urethane.

5. The pumping unit of claim 4 wherein the urethane has a durometer hardness rating between 90-A and 95-A.

6. The pumping unit of claim 1 wherein the pipe sections (24) are each capable of sustaining an internal pressure of at least 1200 psi (82.7 bar).

7. A mobile pumping vehicle (10) comprising:
a vehicle body (20);
a material supply bin (16) mounted to the body for receiving a material to be pumped by the pumping vehicle;
a multi-section movable boom arm (12) having a plurality of boom sections (14a-14c), the boom arm being mounted to the body and extendible from a folded position to an extended position; and
a boom pipe supported by the boom arm for directing the flow of material from the supply bin to an outer end of the boom arm,
wherein the boom pipe is comprised of a plurality of joined composite pipe sections (24) **characterized in that** said pipe sections (24) each having a filament-wound reinforcing outer layer (46), a wear resistant inner layer (42), and an end coupling (30, 32) secured to both ends of the supply pipe section (24), each end coupling being secured to the pipe section by an adhesive.

8. The mobile pumping vehicle of claim 7 wherein the reinforcing outer layer (46) is formed from a wound layer of braided fiber applied to an outer surface of the inner layer (42).

9. The mobile pumping vehicle of claim 8 wherein the braided fiber is formed from carbon fiber.

10. The mobile pumping vehicle of claim 9, wherein the wear resistant inner layer (42) is formed from urethane.

11. The mobile pumping vehicle of claim 10 wherein the urethane has a durometer hardness rating between 90-A and 95-A.

12. The mobile pumping vehicle of claim 7 wherein the pipe sections (18) are each capable of sustaining an internal pressure of at least 1200 psi (82.7 bar).

## Patentansprüche

1. Pumpeneinheit, welche folgende Merkmale umfasst:
einen mehrgliedrigen beweglichen Auslegerarm (12) mit einer Vielzahl von Auslegerabschnitten (14a-14c), wobei der Auslegerarm aus einer eingefahrenen Position in eine ausgefahrene Position bewegt werden kann; und
ein vom Auslegerarm abgestütztes Auslegerrohr, das sich zwischen einem Materialvorrat und einem äußeren Ende (23) des Auslegerarms erstreckt,
wobei sich das Auslegerrohr aus einer Vielzahl von miteinander verbundenen Auslegerrohrabschnitten (24) zusammensetzt, **dadurch gekennzeichnet, dass** diese Rohrabschnitte (24) jeweils über eine fasergewickelte verstärkende Außenschicht (46) verfügen, über eine verschleißfeste Innenschicht (42) sowie über an beiden Enden des Zuflussrohrabschnitts (24) angebrachte Endkupplungsstücke (30, 32), wovon jedes Endkupplungsstück mit Klebstoff am Rohrabschnitt befestigt ist.

2. Pumpeneinheit nach Anspruch 1, wobei die verstärkende Außenschicht (46) aus einer gewickelten Schicht aus geflochtenem Gewebe gebildet wird, die auf einer Außenfläche der Innenschicht (42) aufgebracht ist.

3. Pumpeneinheit nach Anspruch 2, wobei das geflochtene Gewebe aus Kohlefaser gebildet wird.

4. Pumpeneinheit nach Anspruch 2, wobei die verschleißfeste Innenschicht (42) aus Urethan gebildet wird.

5. Pumpeneinheit nach Anspruch 4, wobei das Urethan über einen Durometer Härtegrad zwischen 90-A und 95-A verfügt.

6. Pumpeneinheit nach Anspruch 1, wobei die Rohrabschnitte (24) jeweils einem Innendruck von mindestens 1200 psi (82.7 bar) standhalten können.

7. Mobiles Pumpenfahrzeug (10), welches die folgenden Merkmale umfasst:
eine Fahrzeugkarosserie (20),
einen Materialvorratsbehälter (16), der zur Aufnahme eines Materials an der Karosserie angebracht ist, welches vom Pumpenfahrzeug gepumpt werden soll;
einen mehrgliedrigen beweglichen Auslegerarm (12) mit einer Vielzahl von Auslegerabschnitten (14a-14c), wobei der Auslegerarm an der Karosserie angebracht ist und aus einer eingefahrenen Position in eine ausgefahrene Position bewegt werden kann; und
ein vom Auslegerarm abgestütztes Auslegerrohr zur Leitung des Materialflusses aus dem Vorratsbehälter an ein äußeres Ende des Auslegerarms,
wobei sich das Auslegerrohr aus einer Vielzahl von miteinander verbundenen Verbundrohrabschnitten (24) zusammensetzt, **dadurch gekennzeichnet, dass** diese Rohrabschnitte (24) jeweils über eine fasergewickelte verstärkende Außenschicht (46) verfügen, über eine verschleißfeste Innenschicht (42) sowie über an beiden Enden des Zuflussrohrabschnitts (24) angebrachte Endkupplungsstücke' (30, 32), wovon jedes Endkupplungsstück mit Klebstoff am Rohrabschnitt befestigt ist.

8. Mobiles Pumpenfahrzeug nach Anspruch 7, wobei die verstärkende Außenschicht (46) aus einer gewickelten Schicht aus geflochtenem Gewebe gebildet wird, die auf einer Außenfläche der Innenschicht (42) aufgebracht ist.

9. Mobiles Pumpenfahrzeug nach Anspruch 8, wobei das geflochtene Gewebe aus Kohlefaser gebildet wird.

10. Mobiles Pumpenfahrzeug nach Anspruch 9, wobei die verschleißfeste Innenschicht (42) aus Urethan gebildet wird.

11. Mobiles Pumpenfahrzeug nach Anspruch 10, wobei das Urethan über einen Durometer Härtegrad zwischen 90-A und 95-A verfügt.

12. Mobiles Pumpenfahrzeug nach Anspruch 7, wobei die Rohrabschnitte (18) jeweils einem Innendruck von mindestens 1200 psi (82.7 bar) standhalten können.

## Revendications

1. Unité de pompage comprenant:
un bras de flèche (12) mobile à sections multiples comprenant une pluralité de sections de flèche (14a-14c), le bras de flèche pouvant s'étendre d'une position pliée vers une position étendue; et
un tuyau de flèche supporté par le bras de flèche, le tuyau de flèche s'étendant entre une alimentation de matériau et une extrémité extérieure (23) du bras de flèche,
dans laquelle le tuyau de flèche est formé d'une pluralité de sections de tuyau de flèche (24) assemblées, **caractérisée par le fait que** lesdites sections de tuyau (24) sont pourvues chacune d'une couche extérieure de renforcement (46) à filament enroulé, d'une couche intérieure (42) résistante à l'usure et d'un manchon d'accouplement d'extrémité (30, 32) fixé aux deux extrémités de la section de tuyau d'alimentation (24), chaque manchon d'accouplement d'extrémité étant fixé sur la section de tuyau par un adhésif.

2. Unité de pompage selon la revendication 1, dans laquelle la couche extérieure de renforcement (46) est formée d'une couche enroulée de fibre tressée appliquée sur une surface extérieure de la couche intérieure (42).

3. Unité de pompage selon la revendication 2, dans laquelle la fibre tressée est formée d'une fibre de carbone.

4. Unité de pompage selon la revendication 2, dans laquelle la couche intérieure (42) résistante à l'usure est en uréthane.

5. Unité de pompage selon la revendication 4, dans laquelle l'uréthane a une dureté mesurée au duromètre comprise entre 90-A et 95-A.

6. Unité de pompage selon la revendication 1, dans laquelle les sections de tuyau (24) sont capables de supporter chacune une pression intérieure d'au moins 1 200 psi (82,7 bar).

7. Véhicule de pompage mobile (10) comprenant:
une carrosserie de véhicule (20);
une benne d'alimentation de matériau (16) montée sur la carrosserie pour recevoir un matériau devant être pompé par le véhicule de pompage;
un bras de flèche (12) mobile à sections multiples comprenant une pluralité de sections de flèche (14a-14c), le bras de flèche étant monté sur la carrosserie et pouvant s'étendre d'une position pliée vers une position étendue; et
un tuyau de flèche supportée par le bras de flèche pour diriger l'écoulement de matériau de la benne d'alimentation vers une extrémité extérieure du bras de flèche,
dans lequel le tuyau de flèche est formé d'une pluralité de sections de tuyau composites (24) assemblées, **caractérisé par le fait que** lesdites sections de tuyau (24) sont pourvues chacune d'une couche extérieure de renforcement (46) à filament enroulé, d'une couche intérieure (42) résistante à l'usure et d'un manchon d'accouplement d'extrémité (30, 32) fixé aux deux extrémités de la section de tuyau d'alimentation (24), chaque manchon d'accouplement d'extrémité étant fixé sur la section de tuyau par un adhésif.

8. Véhicule de pompage mobile selon la revendication 7, dans lequel la couche extérieure de renforcement (46) est formée d'une couche enroulée de fibre tressée appliquée sur une surface extérieure de la couche intérieure (42).

9. Véhicule de pompage mobile selon la revendication 8, dans lequel la fibre tressée est formée d'une fibre de carbone.

10. Véhicule de pompage mobile selon la revendication 9, dans lequel la couche intérieure (42) résistante à l'usure est en uréthane.

11. Véhicule de pompage mobile selon la revendication 10, dans lequel l'uréthane a une dureté mesurée au duromètre comprise entre 90-A et 95-A.

12. Véhicule de pompage mobile selon la revendication 7, dans lequel les sections de tuyau (18) sont capables de supporter chacune une pression intérieure d'au moins 1 200 psi (82,7 bar).
